# EUROPEAN PATENT APPLICATION

(11) **EP 4 703 157 A1**
(43) Date of publication of application: **04.03.2026**
(21) Application number: 24796007.3
(22) Date of filing: 22.04.2024
(51) Int. Cl.: B60C 23/00

(54) **TIRE PRESSURE ADJUSTING SYSTEM AND METHOD, AND VEHICLE**

(30) Priority: 28.04.2023 CN 202310488377
(71) Applicant: BYD Company Limited, Shenzhen, Guangdong 518118 (CN)
(72) Inventor: WANG, Ping, Shenzhen, Guangdong 518118 (CN); WEN, Jiakai, Shenzhen, Guangdong 518118 (CN); WU, Sheng, Shenzhen, Guangdong 518118 (CN)
(74) Representative: Mathys & Squire
(86) International application number: PCT/CN2024/089106
(87) International publication number: WO 2024/222626

(57) **Abstract**

This application discloses a tire pressure regulating system and method, and a vehicle. A wireless control switch valve of the tire pressure regulating system is configured to control opening and closing of a tire air chamber of a vehicle tire. A controller controls, through a wireless communication module, the wireless control switch valve to open the tire air chamber after determining that a vehicle meets a preset inflation or deflation condition, and controls, through the wireless communication module, the wireless control switch valve to close the tire air chamber after an inflation or deflation operation on the tire air chamber is completed.

## Description

This application claims priority to Chinese Patent Application No. 202310488377.5, filed on April 28, 2023 and entitled "TIRE PRESSURE REGULATING SYSTEM AND METHOD, AND VEHICLE", which is incorporated herein by reference in its entirety.

### TECHNICAL FIELD

This application relates to the field of tire pressure regulating technologies, and in particular, to a tire pressure regulating system and method, and a vehicle.

### BACKGROUND

With the rapid development of the automobile industry, people's requirements for vehicle safety and driving experience have also increased, and tire pressures of tires are particularly important for vehicle driving safety and driving comfort. In the prior art, when collecting and managing tire pressure of a vehicle, a tire pressure monitoring system (TPMS, tire pressure monitoring system) is generally mounted on the vehicle to monitor tire pressures of all the tires. However, shortcomings of this solution are: although the tire pressure monitoring system can collect and monitor the tire pressure of the vehicle, and send alarm signals to remind drivers through display devices such as an instrument cluster and a multimedia central control screen when the tire pressure is abnormal, it cannot actively and effectively manage the tire pressure, and the tires require manual inflation or deflation with the help of external tools.

### SUMMARY

Embodiments of this application provide a tire pressure regulating system and method, and a vehicle to solve the problem in the prior art that the tires need to be inflated or deflated manually with the help of external tools.

A tire pressure regulating system includes:
a wireless control switch valve, mounted on a vehicle tire and configured to control opening and closing of a tire air chamber of the vehicle tire; and
a controller, including a wireless communication module that is connected to the wireless control switch valve in a wireless communication manner, wherein the controller is configured to control, through the wireless communication module, the wireless control switch valve to open the tire air chamber after determining that a vehicle meets a preset inflation or deflation condition, and control, through the wireless communication module, the wireless control switch valve to close the tire air chamber after an inflation or deflation operation on the tire air chamber is completed.

As an embodiment, the controller is configured to determine whether the vehicle meets the preset inflation or deflation condition based on a current working mode and vehicle working parameters of the vehicle.

As an embodiment, the tire pressure regulating system further includes a rotary sealing apparatus provided with a sealed rotary air chamber; and the wireless control switch valve is configured to open or close the tire air chamber to control opening and closing of an air pathway between the sealed rotary air chamber and the tire air chamber.

As an embodiment, the tire pressure regulating system further includes an air source and an integrated valve that are both connected to the controller; and the controller is further configured to control, through the integrated valve, opening and closing of an air pathway between the sealed rotary air chamber and an atmosphere and an air pathway between the sealed rotary air chamber and the air source.

As an embodiment, the integrated valve includes an inflation valve and a deflation valve; the controller is further configured to control, through the inflation valve, opening and closing of the air pathway between the sealed rotary air chamber and the air source; and the controller is further configured to control, through the deflation valve, opening and closing of the air pathway between the sealed rotary air chamber and the atmosphere.

As an embodiment, the integrated valve includes an air pressure sensor; and the controller is further configured to monitor, through the air pressure sensor, an air pressure in an air pathway communicating with a chamber of the integrated valve.

As an embodiment, the tire pressure regulating system further includes a tire pressure monitoring sensor mounted on the vehicle tire, the controller includes a tire pressure monitoring module, and the tire pressure monitoring sensor is connected to the tire pressure monitoring module in a wireless communication manner.

A tire pressure regulating method includes:
controlling, by a wireless communication module, a wireless control switch valve to open a tire air chamber of a vehicle tire to perform an inflation or deflation operation on the tire air chamber after determining that a vehicle meets a preset inflation or deflation condition; and
controlling, by the wireless communication module, the wireless control switch valve to close the tire air chamber after determining that the inflation or deflation operation is completed.

As an embodiment, determining that the vehicle meets the preset inflation or deflation condition includes:
obtaining a current working mode and vehicle working parameters of the vehicle; and
determining whether the vehicle meets the preset inflation or deflation condition based on the current working mode and the vehicle working parameters.

As an embodiment, the current working mode includes an automatic regulation mode; and the vehicle working parameters include a current vehicle speed; and
determining whether the vehicle meets the preset inflation or deflation condition based on the current working mode and the vehicle working parameters includes:
determining whether the current vehicle speed is within a preset vehicle speed range when the current working mode is the automatic regulation mode; and
determining that the vehicle meets the preset inflation or deflation condition when the current vehicle speed is within the preset vehicle speed range.

As an embodiment, the current working mode includes an automatic regulation mode; and controlling, by the wireless communication module, the wireless control switch valve to open the tire air chamber of the vehicle tire to perform the inflation or deflation operation on the tire air chamber includes:
obtaining a target working condition of the vehicle in the automatic regulation mode, and determining a standard tire pressure range corresponding to the target working condition;
controlling, by the wireless communication module, the wireless control switch valve to open the tire air chamber of the vehicle tire to perform a deflation operation on the tire air chamber when a current tire pressure of the vehicle tire is greater than a maximum value in the standard tire pressure range; and
controlling, by the wireless communication module, the wireless control switch valve to open the tire air chamber of the vehicle tire to perform an inflation operation on the tire air chamber when the current tire pressure of the vehicle tire is less than a minimum value in the standard tire pressure range.

As an embodiment, the current working mode includes a custom mode; and the vehicle working parameters include a current vehicle speed and a current gear position; and
determining whether the vehicle meets the preset inflation or deflation condition based on the current working mode and the vehicle working parameters includes:
determining whether the current vehicle speed is equal to 0 and whether the current gear position is in a P gear when the current working mode is the custom mode; and
determining that the vehicle meets the preset inflation or deflation condition when the current vehicle speed is equal to 0 and the current gear position is in the P gear.

As an embodiment, the current working mode includes a custom mode; and controlling, by the wireless communication module, the wireless control switch valve to open the tire air chamber of the vehicle tire to perform the inflation or deflation operation on the tire air chamber includes:
obtaining a target control requirement of the vehicle in the custom mode;
controlling, by the wireless communication module, the wireless control switch valve to open the tire air chamber of the vehicle tire to perform a deflation operation on the tire air chamber when the target control requirement is a deflation control requirement; and
controlling, by the wireless communication module, the wireless control switch valve to open the tire air chamber of the vehicle tire to perform an inflation operation on the tire air chamber when the target control requirement is an inflation control requirement.

As an embodiment, performing the deflation operation on the tire air chamber includes:
controlling, by a deflation valve in an integrated valve, an air pathway between a sealed rotary air chamber and an atmosphere to be opened, so that gas in the tire air chamber is discharged to the atmosphere through the wireless control switch valve, the sealed rotary air chamber, and the deflation valve in sequence; and
controlling, by the wireless communication module, the wireless control switch valve to close the tire air chamber after determining that the inflation or deflation operation is completed includes:
   when it is determined that a tire pressure in the tire air chamber reaches a target tire pressure value, determining that the deflation operation is completed and controlling, by the wireless communication module, the wireless control switch valve to close the tire air chamber.

As an embodiment, after determining that the deflation operation is completed and controlling, by the wireless communication module, the wireless control switch valve to close the tire air chamber, the method further includes:
controlling the deflation valve to be closed after keeping the deflation valve open for a first duration.

As an embodiment, performing the inflation operation on the tire air chamber includes:
controlling, by an inflation valve in an integrated valve, an air pathway between a sealed rotary air chamber and an air source to be opened and controlling the air source to start, so that gas in the air source enters the tire air chamber through the inflation valve, the sealed rotary air chamber, and the wireless control switch valve in sequence; and
controlling, by the wireless communication module, the wireless control switch valve to close the tire air chamber after determining that the inflation or deflation operation is completed includes:
   when it is determined that a tire pressure in the tire air chamber reaches a target tire pressure value, determining that the inflation operation is completed, controlling, by the wireless communication module, the wireless control switch valve to close the tire air chamber, and controlling the air source and the inflation valve to be closed.

As an embodiment, after determining that the inflation operation is completed, controlling, by the wireless communication module, the wireless control switch valve to close the tire air chamber, and controlling the air source and the inflation valve to be closed, the method includes:
controlling, by a deflation valve in the integrated valve, an air pathway between the sealed rotary air chamber and an atmosphere to be opened, and controlling the deflation valve to be closed after keeping the deflation valve open for a second duration.

A vehicle includes a controller, wherein the controller is configured to perform the tire pressure regulating method.

In the foregoing tire pressure regulating system and method, and the vehicle, the wireless control switch valve of the tire pressure regulating system can be configured to control opening and closing of the tire air chamber of the vehicle tire. Therefore, the controller can control, through the wireless communication module, the wireless control switch valve to open the tire air chamber after determining that the vehicle meets the preset inflation or deflation condition, and control, through the wireless communication module, the wireless control switch valve to close the tire air chamber after the inflation or deflation operation on the tire air chamber is completed. In this way, in this application, the wireless control switch valve can be wirelessly controlled by the wireless communication module in the controller to implement the inflation or deflation operation on the vehicle tire (without the need for external tools to manually inflate or deflate the vehicle tire), thereby automatically and effectively managing the tire pressure.

### BRIEF DESCRIPTION OF DRAWINGS

To describe the technical solutions in embodiments of this application more clearly, the following briefly describes the drawings required for describing the embodiments of this application. Clearly, the accompanying drawings in the following description show merely some embodiments of this application, and a person of ordinary skill in the art may still derive other drawings from these accompanying drawings without creative efforts.
FIG. 1 is a schematic diagram of a structure of a tire pressure regulating system according to an embodiment of this application;
FIG. 2 is a flowchart of a tire pressure regulating method according to an embodiment of this application;
FIG. 3 is a schematic diagram of an exploded structure of a wireless control switch valve according to an embodiment of this application;
FIG. 4 is a schematic diagram of a computer device according to an embodiment of this application; and
FIG. 5 is a schematic diagram of a vehicle according to an embodiment of this application.

Reference numerals in this specification are as follows:
100: Wireless control switch valve; 200: Controller; 201: Wireless communication module; 202: Tire pressure monitoring module; 300: Rotary sealing apparatus; 400: Air source; 500: Integrated valve; 501: Inflation valve; 502: Deflation valve; 503: Air pressure sensor; 600: Tire pressure monitoring sensor; 700: Vehicle tire; 701: Left rear wheel; 702: Left front wheel; 703: Right rear wheel; 704: Right front wheel; 800: Entire-vehicle instrument; 900: Multimedia central control screen;
1: Valve body; 2: Sealing gasket; 3: Piston rod; 4: Fixing bolt; 5: Lead screw; 6: Compression bolt; 7: Reduction gearbox; 8: Motor; 9: Sensor; and 10: Integrated control module.

### DESCRIPTION OF EMBODIMENTS

The following clearly and completely describes technical solutions of the embodiments of this application with reference to the accompanying drawings in the embodiments of this application. Clearly, the described embodiments are merely some rather than all of the embodiments of this application. Based on the embodiments in this application, all other embodiments obtained by a person of ordinary skill in the art without creative efforts fall within the protection scope of this application.

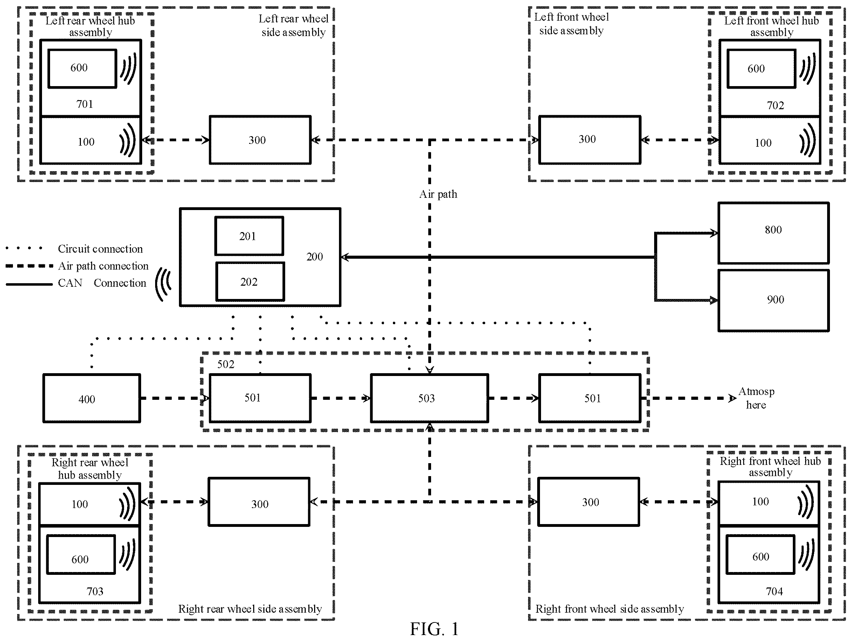

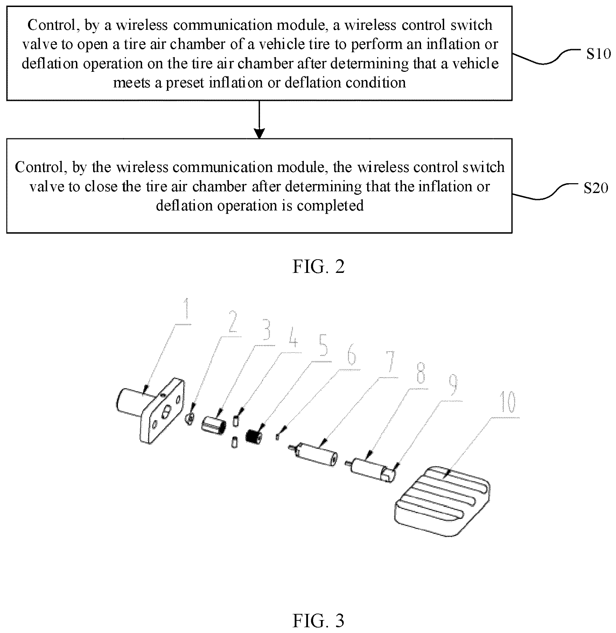

In an embodiment, as shown in FIG. 1, a tire pressure regulating system is provided, including:
a wireless control switch valve 100, mounted on a vehicle tire 700 and configured to control opening and closing of a tire air chamber of the vehicle tire 700, where as shown in FIG. 3, the wireless control switch valve 100, as a core component of the tire pressure regulating system, mainly includes a valve body 1, a sealing gasket 2, a piston rod 3, a fixing bolt 4, a lead screw 5, a compression bolt 6, a reduction gearbox 7, a motor 8, a sensor 9, and an integrated control module 10, wherein the motor 8 serves as a power source of the wireless control switch valve 100, and rotation of the motor 8 can directly drive the reduction gearbox 7 to perform rotary motion, and then the lead screw 5 converts the rotary motion of the reduction gearbox 7 into linear motion, so that the piston rod 3 can perform linear motion; the back-and-forth linear motion of the piston rod 3 in the valve body 1 implements switching between an open state and a closed state of a valve port of the wireless control switch valve 100, thereby implementing opening and closing of the tire air chamber; the integrated control module 10 includes a main control module, a wireless receiving module, and a power module; the main control module can directly receive a control signal sent by a wireless communication module 201 of a controller 200 mentioned later through the wireless receiving module, thereby directly controlling rotation of the motor 8 based on the control signal; the main control module processes information such as the number of rotations rotations and output torque of the motor collected by the sensor 9. By controlling the number of rotations and the output torque of the motor 8, a stroke amount of the piston rod 3 and a closing force of the wireless control switch valve 100 are controlled; and the power module provides power to the main control module, the wireless receiving module, the motor 8, and the sensor 9; and the wireless control switch valve 100 includes but is not limited to a wireless electric control valve (rather than a pneumatically controlled passive wheel side valve). A mounting hole is provided in the valve body 1 of the wireless control switch valve 100. The wireless control switch valve 100 can be directly fixed to a wheel hub assembly of the vehicle tire 700 through a bolt passing through the mounting hole. In this way, through the foregoing design of the wireless control switch valve 100, reliability and safety of the entire tire pressure regulating system can be improved while implementing opening and closing of an air pathway; and
a controller 200, including a wireless communication module 201 that is connected to the wireless control switch valve 100 in a wireless communication manner, wherein the controller 200 is configured to control, through the wireless communication module 201, the wireless control switch valve 100 to open the tire air chamber after determining that a vehicle meets a preset inflation or deflation condition, and control, through the wireless communication module 201, the wireless control switch valve 100 to close the tire air chamber after an inflation or deflation operation on the tire air chamber is completed; and further, the controller 200 is configured to determine whether the vehicle meets the preset inflation or deflation condition based on a current working mode and vehicle working parameters of the vehicle.

In an embodiment, the tire pressure regulating system further includes a tire pressure monitoring sensor 600 mounted on the vehicle tire 700, the controller 200 includes a tire pressure monitoring module 202, and the tire pressure monitoring sensor 600 is connected to the tire pressure monitoring module 202 in a wireless communication manner. Tire pressures of all vehicle tires 700 (including a left rear wheel 701, a left front wheel 702, a right rear wheel 703, and a right front wheel 704) can be respectively collected by tire pressure monitoring sensors 600 mounted on the vehicle tires 700, and directly sent to the tire pressure monitoring module 202 in the controller 200 through a wireless transmission signal. In this way, through the foregoing tire pressure monitoring module 202 and tire pressure monitoring sensor 600, the tire pressure of the vehicle can be collected and monitored, thereby implementing a function of a tire pressure monitoring system (TPMS). In this application, the wireless control switch valve 100 and the tire pressure monitoring sensor 600 are both mounted on a wheel hub assembly of each vehicle tire 700, and the wheel hub assembly, as an end of the entire tire pressure regulating system, is mounted on a wheel side assembly of the vehicle.

The controller 200 can comprehensively analyze and control various subsystems of the tire pressure regulating system shown in FIG. 1, such as an air source 400, an integrated valve 500, the wireless control switch valve 100, and a rotary sealing apparatus 300, and various signal data such as an entire-vehicle signal and tire pressures of tires, thereby implementing active and effective management of tire pressures of tires. Specifically, the controller 200 can obtain signals such as a gear position and a vehicle speed of an entire vehicle through a CAN (controller area network) bus; and the controller 200 can communicate with an entire-vehicle instrument cluster 800 and a multimedia central control screen 900, and then directly display information such as air pressures and system states of all the vehicle tires 700 and the tire pressure regulating system on the entire-vehicle instrument cluster 800 or the multimedia central control screen 900. In this way, a driver can perform man-machine interaction through the entire-vehicle instrument cluster 800 or the multimedia central control screen 900 to further control a working state of the entire tire pressure regulating system.

The controller 200 in this application may be a controller 200 that can independently regulate the tire pressure, or may be a functional module in another controller 200, for example, the controller 200 may be a functional module in a related domain controller 200 integrated in an automobile chassis domain controller 200 (or another controller 200); similarly, the tire pressure monitoring module 202 may be a functional module integrated in the controller 200, or may be an independent tire pressure monitoring controller 200. In this application, the wireless control switch valve 100 can be wirelessly controlled by the wireless communication module 201 in the controller 200 to implement the inflation or deflation operation on the vehicle tire 700 (without the need for external tools to manually inflate or deflate the vehicle tire 700), thereby implementing automatic and effective management of the tire pressure.

In an embodiment, as shown in FIG. 1, the tire pressure regulating system further includes a rotary sealing apparatus 300 provided with a sealed rotary air chamber; and the wireless control switch valve 100 is configured to open or close the tire air chamber to control opening and closing of an air pathway between the sealed rotary air chamber and the tire air chamber. In this embodiment, the rotary sealing apparatus 300 is disposed on the wheel side assembly of the vehicle. The rotary sealing apparatus 300 has a rotary sealing air chamber structure (that is, a sealed rotary air chamber) that is independent and rotatable. In this way, through the sealed rotary air chamber, an air pathway can be formed between a frame and the tire air chamber of the vehicle tire 700. The rotary sealing structure is provided with a rotatable component that converts the air pathway of the tire air chamber in the wheel side assembly into a rotating state through the sealed rotary air chamber (the frame is relatively stationary, and the tire is rotating. Therefore, to form a sealed air pathway between the frame and the tire air chamber, it is necessary to use the sealed rotary air chamber formed in the rotary sealing apparatus 300), and then the air pathway is converted from static to dynamic, thereby implementing connection of air pathways from a vehicle body to a vehicle hub.

In an embodiment, as shown in FIG. 1, the tire pressure regulating system further includes an air source 400 (the air source 400 may be an inflator pump or the like) and an integrated valve 500 that are both connected to the controller 200; and the controller 200 is further configured to control, through the integrated valve 500, opening and closing of an air pathway between the sealed rotary air chamber and an atmosphere and an air pathway between the sealed rotary air chamber and the air source 400. The controller 200, the air source 400, and the integrated valve 500 are respectively mounted at preset positions in the vehicle. The air source 400, the integrated valve 500, the rotary sealing apparatus 300, the wireless control switch valve 100, and the vehicle tire 700 can be connected through corresponding air pathways to form a structural air pathway of the tire pressure regulating system. Through the structural air pathway, an inflation or deflation operation can be performed, thereby implementing active and automatic and effective regulation of the tire pressure.

In an embodiment, as shown in FIG. 1, the integrated valve 500 includes an inflation valve 501 and a deflation valve 502; the controller 200 is further configured to control, through the inflation valve 501, opening and closing of the air pathway between the sealed rotary air chamber and the air source 400; and the controller 200 is further configured to control, through the deflation valve 502, opening and closing of the air pathway between the sealed rotary air chamber and the atmosphere. The inflation valve 501 and the deflation valve 502 may both be electromagnetic air valves.

In an embodiment, as shown in FIG. 1, the integrated valve 500 includes an air pressure sensor 503; and the controller 200 is further configured to monitor, through the air pressure sensor 503, an air pressure in an air pathway communicating with a chamber of the integrated valve. The inflation valve 501, the deflation valve 502, and the air pressure sensor 503 all communicate with the chamber of the integrated valve 500.

Specifically, the inflation valve 501 and the deflation valve 502 in the integrated valve 500 may both be wired electromagnetic air valves, and because the wireless control switch valve 100 is a wireless electric control valve. In this case, the controller 200 is connected to the wireless control switch valve 100 through a wireless control signal, and the controller 200 is connected to the air source 400 and the integrated valve 500 (including the inflation valve 501, the deflation valve 502, and the air pressure sensor 503) through a circuit. In this case, the controller 200 can directly control the wireless control switch valve 100, the air source 400, and the integrated valve 500, thereby controlling working states of the air source of the system and the structural air pathway of the system.

It will be understood that in this embodiment, by controlling the integrated valve 500 and the wireless control switch valve 100, in combination with the air pressure sensor 503 in the integrated valve 500, tire pressure signals of all the tires (including the left rear wheel 701, the left front wheel 702, the right rear wheel 703, and the right front wheel 704) in the vehicle are collected. The air source 400, the integrated valve 500, the rotary sealing apparatus 300, the wireless control switch valve 100, and the vehicle tire 700 can be connected through corresponding air pathways to form a structural air pathway of the tire pressure regulating system. Various air pressure signals (including tire pressures of all the tires, a pressure of the air source of the system, and pressures of all air pathway sections) on the structural air pathway can be collected by the air pressure sensor 503 in the integrated valve 500. In addition, in this application, tire pressure signals of the tires emitted by tire pressure monitoring sensors 600 can also be collected and monitored by the tire pressure monitoring module 202 of the controller 200.

In an embodiment, as shown in FIG. 2, a tire pressure regulating method is provided, including the following steps:
S10: Control, by a wireless communication module 201, a wireless control switch valve 100 to open a tire air chamber of a vehicle tire 700 to perform an inflation or deflation operation on the tire air chamber after determining that a vehicle meets a preset inflation or deflation condition, wherein the preset inflation or deflation condition refers to a prerequisite that needs to be met before the controller 200 can start the inflation or deflation operation on the vehicle tire 700. Preset inflation or deflation conditions that are preset for different current working modes are not the same. Further, it can be determined whether the vehicle meets the preset inflation or deflation condition based on a current working mode and vehicle working parameters of the vehicle.

Specifically, in step S10, before controlling, by the wireless communication module, the wireless control switch valve to open the tire air chamber of the vehicle tire to perform the inflation or deflation operation on the tire air chamber, the method includes the following steps:
Obtain a current working mode and vehicle working parameters of the vehicle. It will be understood that after the controller 200 is powered on, a tire pressure regulating function of the tire pressure regulating system is started. The tire pressure regulating system can directly communicate with the entire-vehicle instrument cluster 800 and the multimedia central control screen 900 through the entire-vehicle CAN bus to obtain a working mode signal directly set by the driver on the entire-vehicle instrument cluster 800 or the multimedia central control screen 900. The working mode signal can represent the current working mode of the vehicle, and the current working mode of the vehicle includes an automatic regulation mode and a custom mode. In the automatic regulation mode, the tire pressure regulating system can automatically regulate the tire pressure of the vehicle tire 700 based on different target working conditions. The target working conditions include but are not limited to a "road working condition", an "off-road working condition", an "extreme cold working condition", a "high temperature working condition", an "emergency working condition", or the like. Different standard tire pressure ranges are set in a one-to-one correspondence manner for different target working conditions. In the automatic regulation mode, the system can automatically regulate tire pressures of all the vehicle tires 700 to a standard tire pressure range corresponding to a target working condition that has been currently set. Whereas, in the custom mode, the driver can customize a target control requirement (the target control requirement refers to an inflation control requirement or a deflation control requirement as for a tire air chamber of a specific vehicle tire 700 that has a target tire pressure value), and then the tire pressure regulating system automatically performs the inflation or deflation operation on the tire pressure of the vehicle tire 700 based on the customized target control requirement. The vehicle working parameters refer to parameters related to current operation of the vehicle, including but not limited to a current vehicle speed or/and a current gear position of the vehicle.

Determine whether the vehicle meets the preset inflation or deflation condition based on the current working mode and the vehicle working parameters. Specifically, when the current working mode is the automatic regulation mode, the preset inflation or deflation condition may be that the current vehicle speed is within a preset vehicle speed range; and when the current working mode is the custom mode, the preset inflation or deflation condition may be that the current vehicle speed is equal to 0 and the current gear position is in a P gear. That is, after determining that the vehicle meets the preset inflation or deflation condition, the wireless control switch valve 100 is controlled by a wireless control signal sent by the wireless communication module 201 to open the tire air chamber of the vehicle tire 700. If one or more tire air chambers corresponding to a plurality of vehicle tires 700 have excessively high tire pressures, it is necessary to perform a deflation operation on the tire air chamber with the excessively high tire pressure, whereas if one or more tire air chambers corresponding to the plurality of vehicle tires 700 have excessively low tire pressures, it is necessary to perform an inflation operation on the tire air chamber with the excessively low tire pressure. It will be understood that because tire pressures of different tires in the vehicle are not the same, a problem may exist that tire pressures of some tire air chambers in the same vehicle may be excessively high and tire pressures of other tire air chambers may be excessively low. Therefore, in this application, it is possible to perform an inflation operation on tire air chambers of some vehicle tires 700 and simultaneously perform a deflation operation on tire air chambers of other vehicle tires 700; and if there are still some tire air chambers whose tire pressures are neither excessively high nor excessively low, the tire air chambers do not need an inflation or deflation operation, and current tire pressures are kept unchanged.

S20: Control, by the wireless communication module 201, the wireless control switch valve 100 to close the tire air chamber after determining that the inflation or deflation operation is completed. That is, after the inflation or deflation operation is completed, the wireless control signal sent by the wireless communication module 201 needs to control the wireless control switch valve 100 to close the tire air chamber, thereby stopping the inflation or deflation operation, and completing tire pressure regulation of the vehicle tire 700.

In this application, the wireless control switch valve 100 can be wirelessly controlled by the wireless communication module 201 in the controller 200 to implement the inflation or deflation operation on the vehicle tire 700 (without the need for external tools to manually inflate or deflate the vehicle tire 700), thereby automatically and effectively managing the tire pressure.

In an embodiment, the current working mode includes an automatic regulation mode; the vehicle working parameters include a current vehicle speed; and determining whether the vehicle meets the preset inflation or deflation condition based on the current working mode and the vehicle working parameters includes the following steps:
Determine whether the current vehicle speed is within the preset vehicle speed range when the current working mode is the automatic regulation mode, wherein the controller 200 obtains a working mode signal from the entire-vehicle CAN bus, the working mode signal represents that when the current working mode set by the driver through the entire-vehicle instrument cluster 800 or the multimedia central control screen 900 is the automatic regulation mode, the controller 200 will directly obtain a related message of a vehicle speed signal through the entire-vehicle CAN bus to determine the current vehicle speed. Then, it is determined whether the current vehicle speed is within the preset vehicle speed range, wherein the preset vehicle speed range is set based on a demand, for example, set to 0 km/h to 30 km/h or 0 km/h to 80 km/h, wherein a lowest vehicle speed in the preset vehicle speed range is 0, and a highest vehicle speed may be other vehicle speed values except 30 km/h or 80 km/h. The setting of the foregoing preset vehicle speed range is firstly for safety considerations, and secondly, material properties of the entire tire pressure regulating system are also taken into account, especially, determination of material properties of the rotary sealing apparatus 300.

Determine that the vehicle meets the preset inflation or deflation condition when the current vehicle speed is within the preset vehicle speed range. It will be understood that a vehicle speed difference ΔV1=V-V1 can be set, wherein V is the current vehicle speed of the vehicle and V1 is a maximum value in the preset vehicle speed range (for example, when the preset vehicle speed range is 0 km/h to 30 km/h, V1 is 30 km/h). In this way, when ΔV1≤0, it is considered that the current vehicle speed is within the preset vehicle speed range. In this case, it is considered that the vehicle meets the corresponding preset inflation or deflation condition in the automatic regulation mode, and a corresponding inflation or deflation operation will be performed based on a standard tire pressure range corresponding to a target working condition in the automatic regulation mode which the vehicle is currently in, thereby implementing tire pressure regulation. It will be understood that while performing an inflation operation or a deflation operation in the automatic regulation mode, current automatic inflation or deflation information and a current tire pressure (a current real-time tire pressure value) are also synchronously fed back to the entire-vehicle instrument cluster 800 or the multimedia central control screen 900 to be displayed, so that the driver performs subsequent operations based on the related information. For example, the driver can stop the inflation operation or the deflation operation according to personal demand based on the real-time tire pressure value displayed on the entire-vehicle instrument cluster 800 or the multimedia central control screen 900, thereby making the tire pressure regulating system enter a sleep mode.

Further, determine that the vehicle does not meet the preset inflation or deflation condition when the current vehicle speed is not within the preset vehicle speed range. It will be understood that when ΔV1>0, it is considered that the current vehicle speed is within the preset vehicle speed range. In this case, it means that the vehicle does not meet the corresponding preset inflation or deflation condition in the automatic regulation mode. In this case, the tire pressure regulating system is in a standby state and will not inflate or deflate a tire. The controller 200 will subsequently continue to determine whether the current vehicle speed meets the preset vehicle speed range until the vehicle meets the preset inflation or deflation condition or exits the current automatic regulation mode.

It will be understood that in this embodiment, after performing the inflation or deflation operation, if the controller 200 determines that the current tire pressure is within the standard tire pressure range corresponding to the target working condition, the inflation or deflation operation will be stopped and the tire pressure regulating system will enter the sleep mode. It will be understood that a purpose of the tire pressure regulating system entering the sleep mode is to save power. In a case that the target working condition does not change, if it is detected that the current tire pressure exceeds the standard tire pressure range, the tire pressure regulating system will be awakened to return again to perform step S10 and subsequent steps thereof. In a case that the target working condition or the current working mode changes, the tire pressure regulating system will also be awakened to return again to perform step S10 and subsequent steps thereof.

In an embodiment, the current working mode includes an automatic regulation mode; and further, in step S10, controlling, by the wireless communication module 201, the wireless control switch valve 100 to open the tire air chamber of the vehicle tire 700 to perform the inflation or deflation operation on the tire air chamber includes the following steps:
Obtain a target working condition of the vehicle in the automatic regulation mode, and determine a standard tire pressure range corresponding to the target working condition, wherein the automatic regulation mode corresponds to a plurality of target working conditions, including but not limited to a "road working condition", an "off-road working condition", an "extreme cold working condition", a "high temperature working condition", an "emergency working condition", or the like. Different standard tire pressure ranges are set in a one-to-one correspondence manner for different target working conditions. When the vehicle enters the automatic regulation mode, the target working conditions can be set synchronously.

Control, by the wireless communication module 201, the wireless control switch valve 100 to open the tire air chamber of the vehicle tire 700 to perform a deflation operation on the tire air chamber when a current tire pressure of the vehicle tire 700 is greater than a maximum value in the standard tire pressure range. That is, when a current tire pressure of a vehicle tire 700 is greater than the maximum value in the standard tire pressure range, it means that the current tire pressure exceeds the standard tire pressure range and the current tire pressure is excessively high. In this case, a deflation operation needs to be performed on the vehicle tire 700 to reduce the current tire pressure of the vehicle tire 700 to the standard tire pressure range.

Control, by the wireless communication module 201, the wireless control switch valve 100 to open the tire air chamber of the vehicle tire 700 to perform an inflation operation on the tire air chamber when the current tire pressure of the vehicle tire 700 is less than a minimum value in the standard tire pressure range. That is, when a current tire pressure of a vehicle tire 700 is less than the minimum value in the standard tire pressure range, it means that the current tire pressure exceeds the standard tire pressure range and the current tire pressure is excessively low. In this case, an inflation operation needs to be performed on the vehicle tire 700 to increase the current tire pressure of the vehicle tire 700 to the standard tire pressure range.

Further, keep the current tire pressure unchanged when the current tire pressure of the vehicle tire 700 is within the standard tire pressure range. That is, when a current tire pressure of a vehicle tire 700 is within the standard tire pressure range, it means that the current tire pressure is moderate, and in this case, there is no need to perform the inflation or deflation operation, and the current tire pressure is kept unchanged.

In this embodiment, in the automatic regulation mode, the tire pressure regulating system can automatically perform different inflation or deflation operations on different tires based on the standard tire pressure range corresponding to the target working condition, or keep the tire pressure unchanged, thereby implementing targeted different tire pressure regulations for different tires of the vehicle and improving regulation accuracy.

In an embodiment, the current working mode includes a custom mode; and the vehicle working parameters include a current vehicle speed and a current gear position; and determining whether the vehicle meets the preset inflation or deflation condition based on the current working mode and the vehicle working parameters includes the following steps:
Determine whether the current vehicle speed is equal to 0 and whether the current gear position is in a P gear when the current working mode is the custom mode, wherein the controller 200 obtains a working mode signal from the entire-vehicle CAN bus, the working mode signal represents that when a working mode of the system set by the driver through the entire-vehicle instrument cluster 800 or the multimedia central control screen 900 is a custom mode, the controller 200 directly obtains related messages of vehicle speed and gear position signals through the entire-vehicle CAN bus, and then determines the current vehicle speed and the current gear position; and afterwards, the controller 200 determines whether the current vehicle speed is equal to 0 km/h and whether the current gear position of the vehicle is in the P gear.

Determine that the vehicle meets the preset inflation or deflation condition when the current vehicle speed is equal to 0 and the current gear position is in the P gear, wherein when the current vehicle speed is equal to 0 and the current gear position is in the P gear, it can be determined that the vehicle meets the corresponding preset inflation or deflation condition in the custom mode. In this case, the controller 200 will perform the inflation or deflation operation on the tire air chamber of the vehicle tire 700 based on a target control requirement selected by the driver (the target control requirement refers to an inflation control requirement or a deflation control requirement as for a tire air chamber of a specific vehicle tire 700 that has a target tire pressure value). It will be understood that while performing an inflation operation or a deflation operation in the custom mode, current automatic inflation or deflation information and a current tire pressure (a current real-time tire pressure value) are also synchronously fed back to the entire-vehicle instrument cluster 800 or the multimedia central control screen 900 to be displayed, so that the driver performs subsequent operations based on the related information. For example, the driver can stop the inflation operation or the deflation operation according to personal demand based on the real-time tire pressure value displayed on the entire-vehicle instrument cluster 800 or the multimedia central control screen 900, thereby making the tire pressure regulating system enter a sleep mode.

Further, determine that the vehicle does not meet the preset inflation or deflation condition when the current vehicle speed is not equal to 0 or the current gear position is not in the P gear, wherein when the current vehicle speed is not equal to 0 or the current gear position is not in the P gear, for example, the current vehicle speed is equal to 0 but the current gear position is not in the P gear, or the current gear position is in the P gear but the current vehicle speed is not equal to 0 (the P gear is a parking gear; and in a case that a parking brake mechanism of the entire vehicle fails, it is possible that the entire vehicle is in the P gear but the current vehicle speed is greater than 0), or in a case that the current vehicle speed is not equal to 0 or the current gear position is not in the P gear, it can be determined that the vehicle does not meet the corresponding preset inflation or deflation condition in the custom mode. In this case, the tire pressure regulating system is in a standby state and will not inflate or deflate a tire. The controller 200 will subsequently continue to determine whether the current vehicle speed is equal to 0 and whether the current gear position is in the P gear until the vehicle meets the preset inflation or deflation condition or exits the current custom mode.

In an embodiment, the current working mode includes a custom mode; and further, in step S10, controlling, by the wireless communication module 201, the wireless control switch valve 100 to open the tire air chamber of the vehicle tire 700 to perform the inflation or deflation operation on the tire air chamber includes the following steps:
Obtain a target control requirement of the vehicle in the custom mode, wherein in the custom mode, the driver can customize the target control requirement, and then the tire pressure regulating system automatically performs an inflation or deflation operation on the vehicle tire 700 based on the customized target control requirement. Specifically, the target control requirement refers to an inflation control requirement or a deflation control requirement as for a tire air chamber of a specific vehicle tire 700 that has a target tire pressure value.

Control, by the wireless communication module 201, the wireless control switch valve 100 to open the tire air chamber of the vehicle tire 700 to perform a deflation operation on the tire air chamber when the target control requirement is a deflation control requirement. It will be understood that when it is determined that the target control requirement is the deflation control requirement, a deflation operation needs to be performed on the vehicle tire 700 to reduce the tire pressure.

Control, by the wireless communication module 201, the wireless control switch valve 100 to open the tire air chamber of the vehicle tire 700 to perform an inflation operation on the tire air chamber when the target control requirement is an inflation control requirement. It will be understood that when it is determined that the target control requirement is an inflation control requirement, an inflation operation needs to be performed on the vehicle tire 700 to increase the tire pressure.

It will be understood that in this embodiment, because tire pressures of different tires in the vehicle are not the same, in the custom mode, the tire pressure regulating system can select a plurality of tires for different tire pressure regulations in combination based on the driver's operating intentions. That is, target control requirements set by the driver for different tires are not the same, and one or both of the deflation control requirement and the inflation control requirement can be set for different tires at the same time, and target tire pressure values corresponding to the same type of target control requirements (such as target tire pressure values corresponding to a plurality of inflation control requirements or a plurality of deflation control requirements) can be the same or different. When different tires are selected in combination for tire pressure regulation, the wireless control switch valve 100 corresponding to a selected tire can be directly opened and a corresponding target tire pressure value can be set. According to the foregoing tire pressure regulating method, an inflation or deflation operation can be performed on the selected tire, and finally the tire pressure regulation is implemented.

In an embodiment, performing the deflation operation on the tire air chamber includes the following step:
Control, by a deflation valve 502 in an integrated valve 500, an air pathway between a sealed rotary air chamber and an atmosphere to be opened, so that gas in the tire air chamber is discharged to the atmosphere through the wireless control switch valve 100, the sealed rotary air chamber, and the deflation valve 502 in sequence. It will be understood that when an active deflation operation is performed on the vehicle tire 700, the wireless communication module 201 first needs to control the wireless control switch valve 100 to open the tire air chamber of the vehicle tire 700 to perform the deflation operation on the tire air chamber. Specifically, a wireless control signal sent by the wireless communication module 201 in the controller 200 shown in FIG. 1 first needs to control the wireless control switch valve 100 to be opened, and the controller 200 still needs to control the deflation valve 502 to be opened, and then gas in the tire air chamber of the vehicle tire 700 will sequentially pass through the wireless control switch valve 100, the sealed rotary air chamber of the rotary sealing apparatus 300 (the air pressure sensor 503 is disposed in an air pathway between the sealed rotary air chamber and the deflation valve 502, and thus after passing through the sealed rotary air chamber, the gas will pass through the air pressure sensor 503 and then enter the deflation valve 502), and the deflation valve 502, and finally the gas in the tire air chamber will be discharged to the atmosphere. Taking the left front wheel 702 on which a deflation operation needs to be performed as an example, gas in the tire air chamber of the left front wheel 702 will sequentially pass through the wireless control switch valve 100, the sealed rotary air chamber of the rotary sealing apparatus 300 of the left front wheel 702, the air pressure sensor 503, and the deflation valve 502, and finally the gas in the tire air chamber of the left front wheel 702 will be discharged to the atmosphere.

Further, step S20, that is, controlling, by the wireless communication module 201, the wireless control switch valve 100 to close the tire air chamber after determining that the inflation or deflation operation is completed includes the following step:
When it is determined that a tire pressure in the tire air chamber reaches a target tire pressure value, determine that the deflation operation is completed and control, by the wireless communication module 201, the wireless control switch valve 100 to close the tire air chamber. That is, after the deflation operation is completed, the tire pressure regulating system still needs to maintain the pressure of the vehicle tire 700. In this case, the controller 200 will first determine whether the tire pressure in the tire air chamber of the vehicle tire 700 has reached the target tire pressure value, and when it is determined that the tire pressure in the tire air chamber has reached the target tire pressure value, it is determined that the deflation operation on the tire pressure air chamber has been completed. In this case, the wireless control signal sent by the wireless communication module 201 in the controller 200 shown in FIG. 1 controls the wireless control switch valve 100 to close the tire air chamber of the vehicle tire 700.

In an embodiment, after determining that the deflation operation is completed and controlling, by the wireless communication module, the wireless control switch valve to close the tire air chamber, the method includes the following step:
Control the deflation valve 502 to be closed after keeping the deflation valve 502 open for a first duration. That is, in this embodiment, after controlling the wireless control switch valve 100 to be closed, the controller 200 still needs to control the deflation valve 502 to keep open. In this case, the structural air pathway of the tire pressure regulating system keeps communicating with the atmosphere through the deflation valve 502. After waiting for a first duration (the first duration is set based on a demand), it can be ensured that a small amount of gas existing in the structural air pathway (the gas in the sealed rotary air chamber and in the air pathway communicating with the sealed rotary air chamber) is completely discharged to the atmosphere. In this case, the deflation valve 502 is controlled to be closed. At this point, it is considered that a pressure maintaining operation on the tire air chamber of the vehicle tire 700 is completed.

In an embodiment, performing the inflation operation on the tire air chamber includes the following step:
Control, by an inflation valve 501 in an integrated valve 500, an air pathway between a sealed rotary air chamber and an air source 400 to be opened and control the air source 400 to start, so that gas in the air source 400 enters the tire air chamber through the inflation valve 501, the sealed rotary air chamber, and the wireless control switch valve 100 in sequence. It will be understood that when an active inflation operation is performed on the vehicle tire 700, the wireless communication module 201 first needs to control the wireless control switch valve 100 to open the tire air chamber of the vehicle tire 700 to perform the inflation operation on the tire air chamber. Specifically, a wireless control signal sent by the wireless communication module 201 in the controller 200 shown in FIG. 1 first needs to control the wireless control switch valve 100 to be opened, and control the air source 400 to start and the inflation valve 501 to be opened, and then gas will sequentially pass through the air source 400, the inflation valve 501 (the air pressure sensor 503 is disposed in an air pathway between the sealed rotary air chamber and the inflation valve 501, and thus after passing through the inflation valve 501, the gas will pass through the air pressure sensor 503 and then enter the sealed rotary air chamber), the sealed rotary air chamber of the rotary sealing apparatus 300, and the wireless control switch valve 100, and finally the gas will be introduced into the tire air chamber of the vehicle tire 700. Taking the left front wheel 702 on which an inflation operation needs to be performed as an example, gas will sequentially pass through the air source 400, the inflation valve 501, the sealed rotary air chamber of the rotary sealing apparatus 300 of the left front wheel 702, and the wireless control switch valve 100, and finally the gas will be introduced into the tire air chamber of the left front wheel 702.

Further, step S20, that is, controlling, by the wireless communication module 201, the wireless control switch valve 100 to close the tire air chamber after determining that the inflation or deflation operation is completed includes the following step:

When it is determined that a tire pressure in the tire air chamber reaches a target tire pressure value, determine that the inflation operation is completed, control, by the wireless communication module 201, the wireless control switch valve 100 to close the tire air chamber, and control the air source 400 and the inflation valve 501 to be closed. That is, the controller 200 will first determine whether the tire pressure in the tire air chamber of the vehicle tire 700 has reached the target tire pressure value, and when it is determined that the tire pressure in the tire air chamber has reached the target tire pressure value, it is determined that the inflation operation on the tire pressure air chamber has been completed. In this case, a wireless control signal sent by the wireless communication module 201 in the controller 200 shown in FIG. 1 controls the wireless control switch valve 100 to be closed; and it is also necessary to control the air source 400 and the inflation valve 501 to be closed to stop the inflation operation.

In an embodiment, after determining that the inflation operation is completed, controlling, by the wireless communication module, the wireless control switch valve to close the tire air chamber, and controlling the air source and the inflation valve to be closed, the method includes the following step:
Control, by a deflation valve 502 in the integrated valve 500, an air pathway between the sealed rotary air chamber and an atmosphere to be opened, and control the deflation valve 502 to be closed after keeping the deflation valve 502 open for a second duration. That is, after the inflation operation is completed, the tire pressure regulating system still needs to perform a pressure maintaining operation, and the controller 200 needs to control the deflation valve 502 to be opened, and keep the deflation valve 502 in an open state during the second pressure maintaining duration. In this case, the structural air pathway of the tire pressure regulating system keeps communicating with the atmosphere through the deflation valve 502. After waiting for the second duration (the second duration is set based on a demand, and may be equal to or unequal to the first duration), it can be ensured that a small amount of gas existing in the structural air pathway (the gas in the sealed rotary air chamber and in an air pathway communicating with the sealed rotary air chamber) is completely discharged to the atmosphere. In this case, the deflation valve 502 is controlled to be closed. At this point, it is considered that the pressure maintaining operation on the tire air chamber of the vehicle tire 700 is completed.

It will be understood that an order of serial numbers of all the steps in the foregoing embodiments does not mean an order of execution. The order of execution of the processes will be determined by functions and internal logic of the processes, and will not impose any limitation on an implementation process of the embodiments of this application.

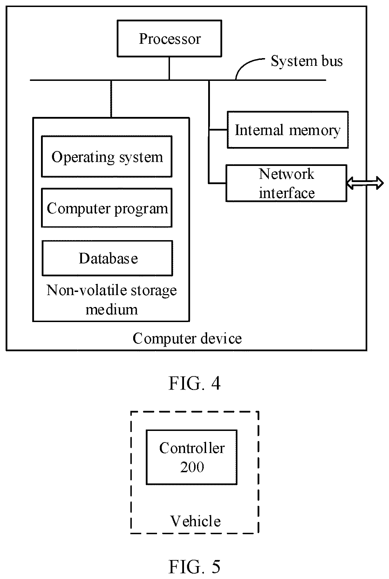

As shown in FIG. 5, this application further provides a vehicle, including a controller 200, and the controller 200 is configured to perform the foregoing tire pressure regulating method.

For more specific limitations on the vehicle and the controller 200, reference may be made to the foregoing limitation on the tire pressure regulating system, which will not be repeated here. All the modules in the foregoing controller 200 may be implemented in whole or in part by software, hardware or a combination of software and hardware. The foregoing modules may be embedded in or independent of a processor in a computer device in a form of hardware, or may be stored in a memory in a computer device in a form of software, so that the processor calls and performs operations corresponding to the foregoing modules. It will be understood that the controller 200 can be regarded as one or more computer devices. As shown in FIG. 4, the computer device includes a processor, a memory, a network interface, and a database that are connected through a system bus. The processor of the computer device is configured to provide computing and control capabilities. The memory of the computer device includes a non-volatile storage medium and an internal memory. The non-volatile storage medium stores an operating system, a computer program, and a database. The internal memory provides an environment for operation of the operating system and the computer program in the non-volatile storage medium. The database of the computer device is configured to store data used by the tire pressure regulating method in the foregoing embodiments. The network interface of the computer device is configured to communicate with an external terminal through a network connection. When the computer program is executed by the processor, a tire pressure regulating method is implemented.

In an embodiment, a computer-readable storage medium is provided. The computer-readable storage medium stores a computer program, and when the computer program is executed by a processor, the foregoing tire pressure regulating method is implemented.

It will be understood by a person of ordinary skill in the art that implementing all or some of the processes in the foregoing embodiment methods can be accomplished in a manner that the computer program instructs related hardware. The computer program can be stored in a non-volatile computer-readable storage medium. When the computer program is executed, processes of the embodiments of all the foregoing methods can be included. Any reference to a memory, storage, a database or other media used in all the embodiments provided in this application may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of description and not limitation, the RAM is available in many forms, such as a static RAM (SRAM), a dynamic RAM (DRAM), a synchronous DRAM (SDRAM), a dual data rate SDRAM (DDRSDRAM), an enhanced SDRAM (ESDRAM), a synchronous link (Synchlink) DRAM (SLDRAM), a rambus (Rambus) direct RAM (RDRAM), a direct rambus dynamic RAM (DRDRAM), and a rambus dynamic RAM (RDRAM), or the like.

It can be clearly understood by a person skilled in the art that for the convenience and simplicity of description, classification of all the foregoing functional units and modules is merely used as an example for description. In actual applications, the foregoing functions can be distributed to be completed by different functional units and modules as needed. That is, an internal structure of an apparatus is classified into different functional units or modules to complete all or some of the functions described above.

The foregoing embodiments are merely used to describe rather than limit the technical solutions of this application. Although this application is described in detail with reference to the aforementioned embodiments, it will be understood by a person skilled in the art that the technical solutions described in the aforementioned embodiments may still be amended, or some of the technical features may be replaced by equivalents. Such amendments or replacements do not deviate the essence of the corresponding technical solutions from the spirit and scope of the technical solutions of the embodiments of this application, and will be included in the protection scope of this application.

## Claims

1. A tire pressure regulating system comprising:
a wireless control switch valve, mounted on a vehicle tire and configured to control opening and closing of a tire air chamber of the vehicle tire; and
a controller, comprising a wireless communication module that is connected to the wireless control switch valve in a wireless communication manner, the controller being configured to control, through the wireless communication module, the wireless control switch valve to open the tire air chamber after determining that a vehicle meets a preset inflation or deflation condition, and control, through the wireless communication module, the wireless control switch valve to close the tire air chamber after an inflation or deflation operation on the tire air chamber is completed.

2. The tire pressure regulating system according to claim 1, wherein the controller is configured to determine whether the vehicle meets the preset inflation or deflation condition based on a current working mode and vehicle working parameters of the vehicle.

3. The tire pressure regulating system according to claim 1, wherein the tire pressure regulating system further comprises a rotary sealing apparatus provided with a sealed rotary air chamber; and the wireless control switch valve is configured to open or close the tire air chamber to control opening and closing of an air pathway between the sealed rotary air chamber and the tire air chamber.

4. The tire pressure regulating system according to claim 3, wherein the tire pressure regulating system further comprises an air source and an integrated valve that are both connected to the controller; and the controller is further configured to control, through the integrated valve, opening and closing of an air pathway between the sealed rotary air chamber and an atmosphere and an air pathway between the sealed rotary air chamber and the air source.

5. The tire pressure regulating system according to claim 4, wherein the integrated valve comprises an inflation valve and a deflation valve; the controller is further configured to control, through the inflation valve, opening and closing of the air pathway between the sealed rotary air chamber and the air source; and the controller is further configured to control, through the deflation valve, opening and closing of the air pathway between the sealed rotary air chamber and the atmosphere.

6. The tire pressure regulating system according to claim 4, wherein the integrated valve comprises an air pressure sensor; and the controller is further configured to monitor, through the air pressure sensor, an air pressure in an air pathway communicating with a chamber of the integrated valve.

7. The tire pressure regulating system according to claim 1, wherein the tire pressure regulating system further comprises a tire pressure monitoring sensor mounted on the vehicle tire, the controller comprises a tire pressure monitoring module, and the tire pressure monitoring sensor is connected to the tire pressure monitoring module in a wireless communication manner.

8. A tire pressure regulating method comprising:
determining that a vehicle meets a preset inflation or deflation condition;
controlling, by a wireless communication module, a wireless control switch valve to open a tire air chamber of a vehicle tire to perform an inflation or deflation operation on the tire air chamber; and
controlling, by the wireless communication module, the wireless control switch valve to close the tire air chamber after determining that the inflation or deflation operation is completed.

9. The tire pressure regulating method according to claim 8, wherein determining that the vehicle meets the preset inflation or deflation condition comprises:
obtaining a current working mode and vehicle working parameters of the vehicle; and
determining whether the vehicle meets the preset inflation or deflation condition based on the current working mode and the vehicle working parameters.

10. The tire pressure regulating method according to claim 9, wherein the current working mode comprises an automatic regulation mode; and the vehicle working parameters comprise a current vehicle speed; and
determining whether the vehicle meets the preset inflation or deflation condition based on the current working mode and the vehicle working parameters comprises:
determining whether the current vehicle speed is within a preset vehicle speed range when the current working mode is the automatic regulation mode; and
determining that the vehicle meets the preset inflation or deflation condition when the current vehicle speed is within the preset vehicle speed range.

11. The tire pressure regulating method according to claim 9, wherein the current working mode comprises an automatic regulation mode; and controlling, by the wireless communication module, the wireless control switch valve to open the tire air chamber of the vehicle tire to perform the inflation or deflation operation on the tire air chamber comprises:
obtaining a target working condition of the vehicle in the automatic regulation mode, and determining a standard tire pressure range corresponding to the target working condition;
controlling, by the wireless communication module, the wireless control switch valve to open the tire air chamber of the vehicle tire to perform a deflation operation on the tire air chamber when a current tire pressure of the vehicle tire is greater than a maximum value in the standard tire pressure range; and
controlling, by the wireless communication module, the wireless control switch valve to open the tire air chamber of the vehicle tire to perform an inflation operation on the tire air chamber when the current tire pressure of the vehicle tire is less than a minimum value in the standard tire pressure range.

12. The tire pressure regulating method according to claim 9, wherein the current working mode comprises a custom mode; and the vehicle working parameters comprise a current vehicle speed and a current gear position; and
determining whether the vehicle meets the preset inflation or deflation condition based on the current working mode and the vehicle working parameters comprises:
determining whether the current vehicle speed is equal to 0 and whether the current gear position is in a P gear when the current working mode is the custom mode; and
determining that the vehicle meets the preset inflation or deflation condition when the current vehicle speed is equal to 0 and the current gear position is in the P gear.

13. The tire pressure regulating method according to claim 9, wherein the current working mode comprises a custom mode; and controlling, by the wireless communication module, the wireless control switch valve to open the tire air chamber of the vehicle tire to perform the inflation or deflation operation on the tire air chamber comprises:
obtaining a target control requirement of the vehicle in the custom mode;
controlling, by the wireless communication module, the wireless control switch valve to open the tire air chamber of the vehicle tire to perform a deflation operation on the tire air chamber when the target control requirement is a deflation control requirement; and
controlling, by the wireless communication module, the wireless control switch valve to open the tire air chamber of the vehicle tire to perform an inflation operation on the tire air chamber when the target control requirement is an inflation control requirement.

14. The tire pressure regulating method according to claim 11 or 13, wherein performing the deflation operation on the tire air chamber comprises:
controlling, by a deflation valve in an integrated valve, an air pathway between a sealed rotary air chamber and an atmosphere to be opened, so that gas in the tire air chamber is discharged to the atmosphere through the wireless control switch valve, the sealed rotary air chamber, and the deflation valve in sequence; and
controlling, by the wireless communication module, the wireless control switch valve to close the tire air chamber after determining that the inflation or deflation operation is completed comprises:
when it is determined that a tire pressure in the tire air chamber reaches a target tire pressure value, determining that the deflation operation is completed and controlling, by the wireless communication module, the wireless control switch valve to close the tire air chamber.

15. The tire pressure regulating method according to claim 14, wherein after determining that the deflation operation is completed and controlling, by the wireless communication module, the wireless control switch valve to close the tire air chamber, the method further comprises:
controlling the deflation valve to be closed after keeping the deflation valve open for a first duration.

16. The tire pressure regulating method according to claim 11 or 13, wherein performing the inflation operation on the tire air chamber comprises:
controlling, by an inflation valve in an integrated valve, an air pathway between a sealed rotary air chamber and an air source to be opened and controlling the air source to start, so that gas in the air source enters the tire air chamber through the inflation valve, the sealed rotary air chamber, and the wireless control switch valve in sequence; and
controlling, by the wireless communication module, the wireless control switch valve to close the tire air chamber after determining that the inflation or deflation operation is completed comprises:
when it is determined that a tire pressure in the tire air chamber reaches a target tire pressure value, determining that the inflation operation is completed, controlling, by the wireless communication module, the wireless control switch valve to close the tire air chamber, and controlling the air source and the inflation valve to be closed.

17. The tire pressure regulating method according to claim 16, wherein after determining that the inflation operation is completed, controlling, by the wireless communication module, the wireless control switch valve to close the tire air chamber, and controlling the air source and the inflation valve to be closed, the method comprises:
controlling, by a deflation valve in the integrated valve, an air pathway between the sealed rotary air chamber and an atmosphere to be opened, and controlling the deflation valve to be closed after keeping the deflation valve open for a second duration.

18. A vehicle comprising a controller, wherein the controller is configured to perform the tire pressure regulating method according to any one of claims 8 to 17.
